# EUROPÄISCHE PATENTSCHRIFT

(11) **EP 2 312 741 B1**
(45) Veröffentlichungstag und Bekanntmachung des Hinweises auf die Patenterteilung: **03.07.2013**
(21) Anmeldenummer: 10170253.8
(22) Anmeldetag: 21.07.2010
(51) Int. Cl.: H02P 9/04, H02P 9/10

(54) **Verfahren zum Frühzeitigen Erkennen und Vorausschauenden Beherrschen von Verbraucherseitigen Lastabwürfen in einem Elektrischen Netz sowie Vorrichtung zur Durchführung des Verfahrens**
Method for early detection and anticipatory control of consumer-end load shedding in an electrical grid, and apparatus for carrying out the method
Procédé de reconnaissance précoce et de contrôle prédéterminé d'éjections de charge côté utilisateur dans un réseau électrique et dispositif destiné à l'exécution du procédé

(30) Priorität: 30.07.2009 CH 11932009
(43) Veröffentlichungstag der Anmeldung: 20.04.2011
(73) Patentinhaber: Alstom Technology Ltd, 5400 Baden (CH)
(72) Erfinder: Meier, Marcel, CH-5412, Gebenstorf (CH); Stockmann, Christian, D-79787, Lauchringen (DE); Liebig, Erhard, D-79725, Laufenburg (DE); Taborda, Jose, CH-5416, Kirchdorf (CH)

(56) Entgegenhaltungen:
- WO-A1-95/05026
- DE-A1- 3 438 452
- US-A- 4 742 288
- US-A- 5 006 781
- US-A- 5 547 337

## Beschreibung

### TECHNISCHES GEBIET

Die vorliegende Erfindung bezieht sich auf das Gebiet der Energieerzeugung. Sie betrifft ein Verfahren zum frühzeitigen Erkennen und vorausschauenden Beherrschen von verbraucherseitigen Lastabwürfen in einem elektrischen Netz gemäss dem Oberbegriff des Anspruchs 1. Sie betrifft weiterhin eine Vorrichtung zur Durchführung des Verfahrens.

### STAND DER TECHNIK

In elektrischen Netzen muss die erzeugte Leistung gleich gross sein wie die verbrauchte Leistung. Tritt plötzlich ein Ungleichgewicht auf, indem sich Verbraucher ab- oder zuschalten, sich Netze auftrennen oder Stromerzeugungsanlagen abschalten, muss dieses Ungleichgewicht durch geeignete Massnahmen ausgeglichen werden. Treten plötzlich sehr grosse Veränderungen auf, stellt dies erhöhte Anforderungen an die Netzregelung und individuelle Regelung der einzelnen Stromerzeugungsanlagen. Insbesondere das Abschalten von grossen Verbrauchern oder von ganzen Netzteilen stellt für die Stromerzeugungsanlagen eine Gefahr dar. Wenn das Bremsmoment der Verbraucher durch Öffnen von Leistungsschaltern von den Stromerzeugungsanlagen getrennt wird, beginnen die rotierenden Stromerzeugungsanlagen entsprechend ihrer innewohnenden Massenträgheitsmomente zu beschleunigen. Werden keine geeigneten Massnahmen ergriffen, beschleunigen die Stromerzeugungsanlagen auf ihre maximal zulässige Drehzahl und werden durch die Sicherheitseinrichtungen abgeschaltet.

Systeme, welche eine unzulässige Überdrehzahl nach einem Lastabwurf in einem elektrischen Netz verhindern, sind beispielweise aus der Druckschrift US-A-3,601,617 bekannt. Die darin vorgestellten Methoden verwenden eine Drehzahlmessung und die davon abgeleitete Drehzahländerung als Hauptgrösse. Sobald die Drehzahl und die damit verbundene Beschleunigung einen anlagetypischen Wert überschritten haben, werden Massnahmen zur Reduzierung der Antriebsleistung eingeleitet. Um eine Drehzahlerhöhung einwandfrei als Konsequenz eines verbraucherseitigen Lastabwurfes im elektrischen Netz zu erkennen, werden weitere Prozessgrössen wie Temperatur, Druck, Durchfluss usw. sowie elektrische Grössen wie Leistung, Spannung, Strom usw. gemessen und in die Auswertelogik einbezogen. Weiterhin werden auch die im elektrischen Netz vorhandenen Schalter überwacht und in die Logik eingebunden. Entscheidend ist, dass dieser Stand der Technik nicht auf die "mechanische" Drehzahlmessung als eine wesentliche Grösse verzichten kann.

Diese bekannten Massnahmen und Verfahren haben den Nachteil, dass erst einige Zeit nach dem im elektrischen Netz stattfindenden Ereignis reagiert werden kann, wenn nämlich die sekundären Auswirkungen des verbraucherseitigen Lastabwurfes im elektrischen Netz in Form der sich ändernden Drehzahl und der Beschleunigung in der Stromerzeugungsanlage gemessen und ausgewertet werden können. Es ist somit nicht möglich frühzeitig geeignete Massnahmen einzuleiten und die Stromerzeugungsanlagen in einen sicheren und der Situation angepassten Betriebszustand zu versetzen. Das damit (zu) späte Reagieren der Stromerzeugungsanlagen führt in der Folge zu einer teilweise unkontrollierten, der Situation nicht angepassten Abschaltung von Stromerzeugungsanlagen mit teilweise unkontrollierten Auswirkungen auf die elektrischen Netze ("Schwarzwerden"), verbunden mit hohen wirtschaftlichen Verlusten (Produktionsausfälle, Verschleiss).

Ein weiteres Verfahren und eine Vorrichtung zum Erfassen eines Lastabwurfes sind aus der Druckschrift DE-A1-103 28 932 bekannt. Grundlage zur Erkennung eines Lastabwurfes im elektrischen Netz ist in dieser Druckschrift die Messung der (Wechsel-) Frequenz der vom Generator erzeugten Wechselspannung. Diese wird mit einer vorgegebenen maximalen Frequenz verglichen. Aus der zeitlichen Erfassung der Frequenz wird als zusätzliche Grösse die Beschleunigung abgeleitet. Diese wird mit einem vorgegebenen maximalen Beschleunigungswert verglichen. Ergänzungen berücksichtigen zusätzlich:
a) die Leistung (Last) der Rotationsmaschine zum Zeitpunkt des Lastabwurfes für die Berechnung des lastabhängigen maximalen Beschleunigungswertes,
b) den Zustand der Rotationsmaschine unterhalb bzw. oberhalb der elektrischen Mindestleistung sowie
c) die Verbindung bzw. Trennung der Rotationsmaschine vom Versorgungsnetz.

Die Frequenz der vom Generator erzeugten Wechselspannung ist direkt proportional zur Drehzahl des Rotors der Rotationsmaschine. Es ist damit völlig egal, ob die Drehzahl des Rotors der Rotationsmaschine oder die Frequenz der vom Generator erzeugten Wechselspannung gemessen wird. D.h., die zeitliche Veränderung beider Grössen hängt in gleichem Masse von der Trägheit des Rotors der Rotationsmaschine ab und ist damit eine "langsame" Grösse. Für die frühzeitige bzw. "vorausschauende" Erkennung eines Lastabwurfes im elektrischen Netz stellt diese "Abhängigkeit von der Trägheit rotierender Massen" einen grossen zeitlichen Nachteil dar. Weiterhin können verschiedene Störungen im Netz, wie transiente Vorgänge, eine Frequenzmessung stark verfälschen und damit die darauf basierenden Verfahren zu falschen Schlüssen verleiten.

Aus der Druckschrift US 4,742,288 ist ein Steuersystem für einen WechselstromMotor/Generator des Wechselstrom-Sekundärerregertyps bekannt, bei dem die Ausgabe des Wechselstrom-Motors/Generators entsprechend der Veränderung der Last eines Leistungsnetzes, mit dem der Wechselstrom-Motor/ Generator verbunden ist, so gesteuert wird, dass die Lastveränderung des Leistungsnetzes durch den Motor/Generator absorbiert wird, so dass das Aussertrittfallen einer mit dem Leistungsnetz verbundenen Synchronmaschine unterbunden und die Stabilität des Leistungsnetzes verbessert wird. Dabei wird auf ein gleichzeitiges Vorhandensein einer Synchronmaschine und eines Motor/Generators abgestellt.

Die Druckschrift US 5,006,781 beschreibt einen Regler für die präzise Regelung von Frequenz, Spannung und Strom einer elektrischen Erzeugereinheit, der eine ganze Reihe von Kontrollfunktionen in einem Mikrocontroller vereint. Dabei basiert die Regelung der elektrischen Frequenz auf der Überwachung der Drehzahl der Maschine mittels einer PID-Regelung. Der Regler selbst kann einen Lastabwurf initiieren. Ein Verfahren zu einem frühzeitiges Erkennen und vorausschauenden Beherrschen schwer erkennbarer verbraucherseitiger Lastabwürfe in einem Versorgungsnetz ist in diesem Dokument jedoch nicht mitgeteilt.

### DARSTELLUNG DER ERFINDUNG

Es ist daher Aufgabe der Erfindung, ein Verfahren zum frühzeitigen Erkennen und vorausschauenden Beherrschen von verbraucherseitigen Lastabwürfen in elektrischen Netzen anzugeben, welches die Nachteile bisheriger Verfahren beseitigt und sich insbesondere durch eine schnelle und fallspezifische Reaktion auszeichnet und einen angepassten Eingriff auf der Stromerzeugungsseite ermöglicht, sowie eine Vorrichtung zur Durchführung des Verfahrens anzugeben.

Die Aufgabe wird durch die Gesamtheit der Merkmale der Ansprüche 1 und 10 gelöst. Wesentlich für die Lösung ist, dass ausschliesslich Ströme und Spannungen zwischen dem wenigstens einen Generator und dem elektrischen Wechsel- oder Drehstromnetz und/oder im elektrischen Netz gemessen werden, dass aus den gemessenen Strömen und Spannungen ein oder mehrere Signale für einen Eingriff in die wenigstens eine rotierende Maschine abgeleitet und eingesetzt werden, dass die wenigstens eine rotierende Maschine eine Regelung für die abgegebene Leistung aufweist, und dass die abgeleiteten Signale an die Regelung der wenigstens einen rotierenden Maschine abgegeben werden, um bei einem netzseitigen Lastabwurf die wenigstens eine rotierende Maschine in ihrer Leistungsabgabe derart zu beeinflussen, dass Erzeugung und Nachfrage von elektrischer Leistung schnell wieder in Übereinstimmung gebracht werden können. Sie zeichnet sich dadurch aus, dass aus den gemessenen Strömen und Spannungen eine oder mehrere elektrische Grössen abgeleitet werden, dass aus den abgeleiteten elektrischen Grössen der zeitliche Gradient dieser und/oder weiterer Grössen berechnet wird, und dass die Signale für einen Eingriff in die wenigstens eine rotierende Maschine erzeugt werden, sobald eine oder mehrere der berechneten zeitlichen Gradienten einen jeweils zugeordneten Schwellwert über- bzw. unterschreiten.

Dabei umfassen die abgeleiteten elektrischen Grössen die Wirkleistung, den Wirkstrom, und die Blindleistung und oder den Blindstrom und die berechneten zeitlichen Gradienten den Wirkleistungsgradienten, den Wirkstromgradienten, den Blindstrom- oder Blindleistungsgradienten und den Drehzahlgradienten.

Im später erläuterten Ausführungsbeispiel umfassen die abgeleiteten elektrischen Grössen die Wirkleistung, den Wirkstrom und den Blindstrom. Statt des

Blindstromes kann aber auch die Blindleistung zur Auswertung herangezogen werden.

Eine andere Ausgestaltung des erfindungsgemässen Verfahrens ist dadurch gekennzeichnet, dass durch den Vergleich der berechneten Gradienten und des Blindstromes oder der Blindleistung mit zugeordneten Schwellwerten die Bildung von entsprechenden Schwellwertsignalen erfolgt, und dass zur Erzeugung der Signale für den Eingriff in die wenigstens eine rotierende Maschine die Schwellwertsignale in einer Auswerteeinheit logisch miteinander verknüpft werden.

Eine weitere Ausgestaltung zeichnet sich dadurch aus, dass die wenigstens eine rotierende Maschine eine über ein Stellglied in der Leistungsabgabe steuerbare Turbine ist, und dass die Signale für den Eingriff in die Turbine an eine Regelung weitergeleitet werden, an welche das Stellglied angeschlossen ist.

Die Turbine kann dabei eine Dampfturbine sein und das Stellglied die Zufuhr von Dampf zur Turbine steuern. Die Einwirkung erfolgt dabei über einen Regler und das Stellglied (Haupteinlassventil und/oder Bypassventil) auf die Dampfzufuhr zur Turbine.

Die Turbine kann aber auch Teil einer Gasturbine sein und das Stellglied die Zufuhr von Brennstoff und/oder Verbrennungsluft zur Gasturbine steuern. Ein Regler beeinflusst hierbei über das Stellglied (Brennstoffventil und/oder Luftmengenregulierung/verstellbare Vorleitreihe oder Reihen) den Verbrennungsprozess in der Brennkammer der Turbine.

Eine weitere Ausgestaltung des erfindungsgemässen Verfahrens ist **dadurch gekennzeichnet, dass** die Signale für den Eingriff in die Turbine vor der Weiterleitung an die Regelung in einer Ausgangsstufe verstärkt werden.

Des weiteren ist es von Vorteil, wenn alle für die Erkennung eines Lastabwurfs erforderlichen elektrischen Grössen sowie ein "zu erwartender" oder "fiktiver" Drehzahlgradient des Rotors der wenigstens einen rotierenden Maschine aus einer ein- oder mehrphasigen Messung von Spannung und Strom im elektrischen Wechsel- oder Drehstromnetz gewonnen werden.

Bevorzugt erfolgt die Berechnung einer zu erwartenden Beschleunigung aus der aktuellen Leistung und dem Massenträgheitsmoment des Rotors der wenigstens einen rotierenden Maschine.

Eine andere Ausgestaltung der Erfindung ist **dadurch gekennzeichnet, dass** mehrere jeweils von wenigstens einer rotierenden Maschine angetriebene Generatoren an das elektrische Wechsel- oder Drehstromnetz angeschlossen sind, und dass als Reaktion auf einen Lastabwurf im elektrischen Wechsel- oder Drehstromnetz mit aus den gemessenen Strömen und Spannungen abgeleiteten Signalen wahlweise in die Leistungserzeugung der rotierenden Maschinen eingegriffen wird.

Die erfindungsgemässe Vorrichtung zur Durchführung des Verfahrens umfasst Stromwandler und Spannungswandler, welche zwischen dem wenigstens einen Generator und dem elektrischen Wechsel- oder Drehstromnetz und/oder an ausgewählten Punkten des elektrischen Wechsel- oder Drehstromnetzes angeordnet sind und ausgangsseitig mit wenigstens einer Vorrichtung zum Erfassen eines Lastabwurfs verbunden sind, deren Ausgang mit der wenigstens einen rotierenden Maschine in Wirkverbindung steht.

Eine Ausgestaltung der erfindungsgemässen Vorrichtung ist **dadurch gekennzeichnet, dass** die wenigstens eine rotierende Maschine eine über ein Stellglied in der Leistungsabgabe steuerbare Turbine ist, und dass zwischen dem Ausgang der wenigstens einen Vorrichtung zum Erfassen eines Lastabwurfs und dem Stellglied der Turbine eine Regelung angeordnet ist.

Eine weitere Ausgestaltung zeichnet sich dadurch aus, dass die wenigstens eine Vorrichtung zum Erfassen eines Lastabwurfs eine Messwertaufbereitungseinheit aufweist, welche eingangsseitig die von den Stromwandlern und Spannungswandlern aufgenommenen Ströme und Spannungen erfasst und ausgangsseitig die daraus abgeleitete Wirkleistung, den Wirkstrom und den Blindstrom oder die Blindleistung abgibt, dass hinter der Messwertaufbereitungseinheit Recheneinheiten angeordnet sind, welche aus den von der Messwertaufbereitungseinheit abgegebenen Werten die Änderungsgeschwindigkeiten bzw. zeitlichen Gradienten von Drehzahl, Wirkleistung, Wirkstrom und Blindstrom oder Blindleistung berechnen, dass hinter den Recheneinheiten jeweils ein zugeordneter Schwellwertgeber angeordnet ist, der beim Über- oder Unterschreiten eines Schwellwertes ein entsprechendes Schwellwertsignal abgibt, und dass die Schwellwertsignale einer nachgeordneten Auswerteeinheit zugeführt werden, die nach Massgabe der Schwellwertsignale an ihrem Ausgang ein Lastreduktionssignal zur Beeinflussung der wenigstens einen rotierenden Maschine abgibt.

Insbesondere wird der von der Messwertaufbereitungseinheit abgegebene Blindstrom oder die abgegebene Blindleistung direkt einem weiteren Schwellwertgeber zugeführt, dessen Ausgang mit der Auswerteeinheit verbunden ist.

Mit Vorteil kann der Auswerteeinheit eine Ausgangsstufe zur Verstärkung des Lastreduktionssignals nachgeschaltet sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem stark vereinfachten Blockschaltbild einer Energieerzeugungsanlage mit einer zur Steuerung der rotierenden Maschine eingesetzten Vorrichtung zum Erfassen eines Lastabwurfs gemäss einem bevorzugten Ausführungsbeispiel der Erfindung;
- Fig. 2a-d: verschiedene beispielhafte Möglichkeiten, im Rahmen der Erfindung in einem Kraftwerksblock zwischen dem Generator und dem Netz, einer Sammelschiene oder Schaltanlage die für das Verfahren notwendigen Ströme und Spannungen zu messen und das verstärkte Lastreduktionssignal auf den Regler der einzelnen Kraftwerksblöcke zurückzukoppeln,
- Fig.3: eine beispielhafte Möglichkeit, im Rahmen der Erfindung in einem mehrere Kraftwerksblöcke umfassenden Kraftwerk die für das Verfahren notwendigen Ströme und Spannungen zu messen und das verstärkte Lastreduktionssignal auf den Regler der einzelnen Kraftwerksblöcke zurückzukoppeln,
- Fig. 4: eine beispielhafte Möglichkeit, im Rahmen der Erfindung in einem mehrere Kraftwerke umfassenden Kraftwerksverbund die für das Verfahren notwendigen Ströme und Spannungen zu messen und das verstärkte Lastreduktionssignal auf den oder die Regler der einzelnen Kraftwerksblöcke zurückzukoppeln,
- Fig. 5: beispielhaft die Einwirkung eines Lastreduktionssignals P auf den Regelkreislauf einer Dampfturbine;
- Fig. 6: beispielhaft die Einwirkung eines Lastreduktionssignals P auf den Regelkreislauf einer Gasturbine; und
- Fig. 7: beispielhaft die Einwirkung eines Lastreduktionssignals P auf den Regelkreislauf eines Windenergiekonverters oder einer Meeresströmungsturbine.

### WEGE ZUR AUSFÜHRUNG DER ERFINDUNG

Die Erfindung beschreibt ein Verfahren und eine Vorrichtung zum gegenüber dem Stand der Technik deutlich frühzeitigeren Erkennen und vorausschauenden Beherrschen eines verbraucherseitigen Lastabwurfes in einem elektrischen Netz. Ein weiterer Vorteil der Erfindung besteht darin, dass die einen plötzlichen verbraucherseitigen Leistungsabfall verursachende Störung im elektrischen Netz in stromerzeugungsanlagenseitig lastreduktionsrelevant (Unterbrechung der Übertragungsleitung, Abschaltung von Verbrauchern usw.) und in stromerzeugungsanlagenseitig nicht lastreduktionsrelevant (Kurzschluss, Erdschluss im Netz, Kurzunterbrechung usw.) unterschieden werden kann. Ferner kann die Schwere der Störung im elektrischen Netz erkannt und damit der Situation entsprechend angemessen reagiert werden.

Allein aus der Messung elektrischer Grössen kann die Notwendigkeit einer totalen oder teilweisen Lastreduktion einer oder mehrerer rotierender Stromerzeugungsanlagen abgeleitet werden, und dies zeitlich deutlich früher als das gegenüber dem Stand der Technik über die Messung der Drehzahl bzw. der Beschleunigung der rotierenden Stromerzeugungsanlage bisher möglich ist. Durch das sichere und deutlich frühere Erkennen von für Stromerzeugungsanlagen relevanten Ereignissen in einem elektrischen Netz können die Gegenmassnahmen deutlich moderater und möglicherweise stufenweise ausgeführt werden. Dies wiederum führt zu einer geringeren Anlagenbelastung.

Die Erfindung schützt damit nicht nur die Stromerzeugungsanlage sondern auch das elektrische Netz.

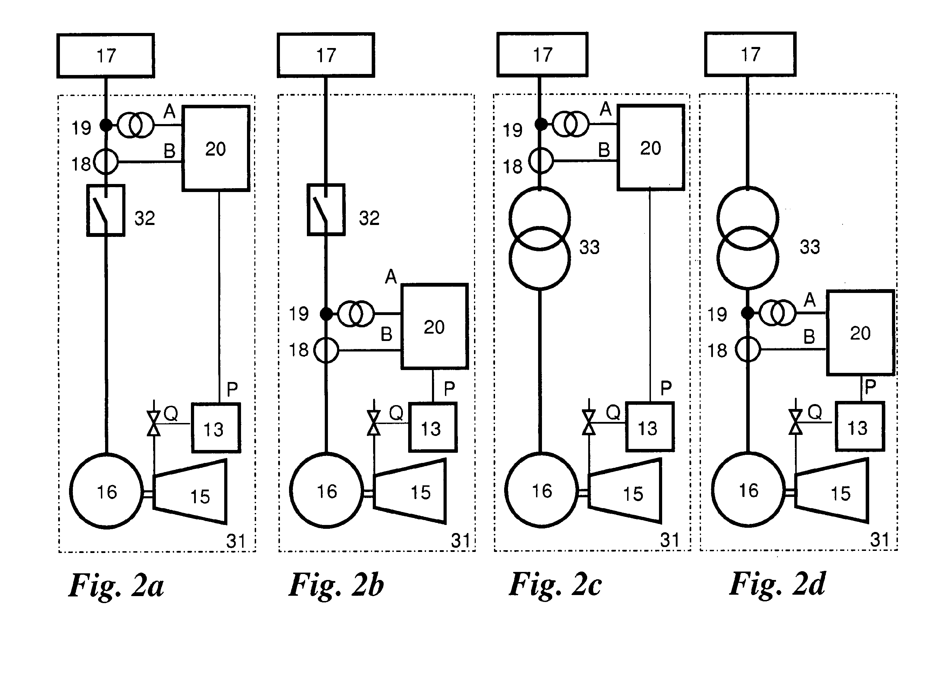

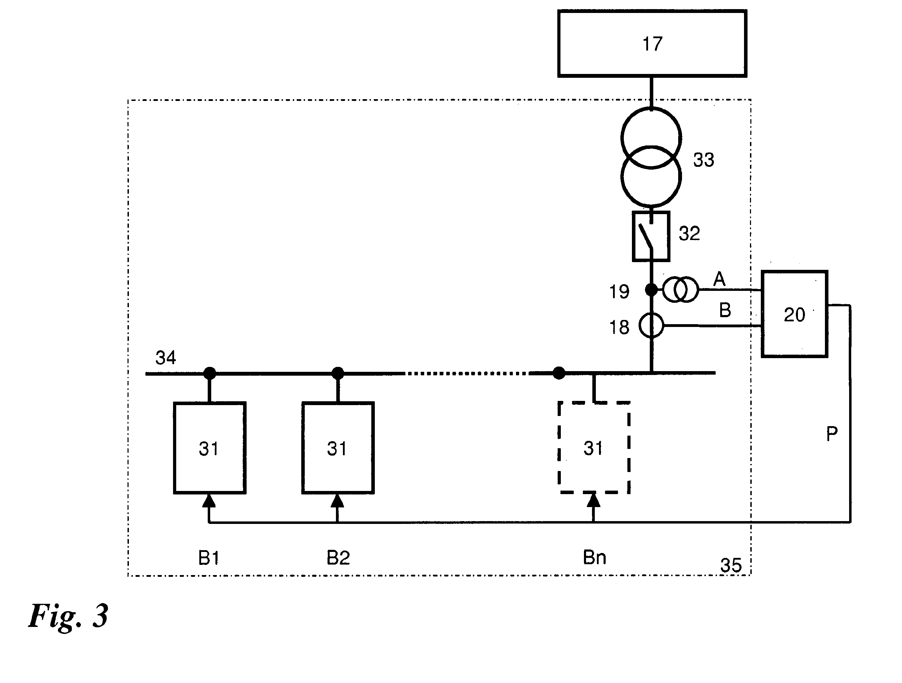

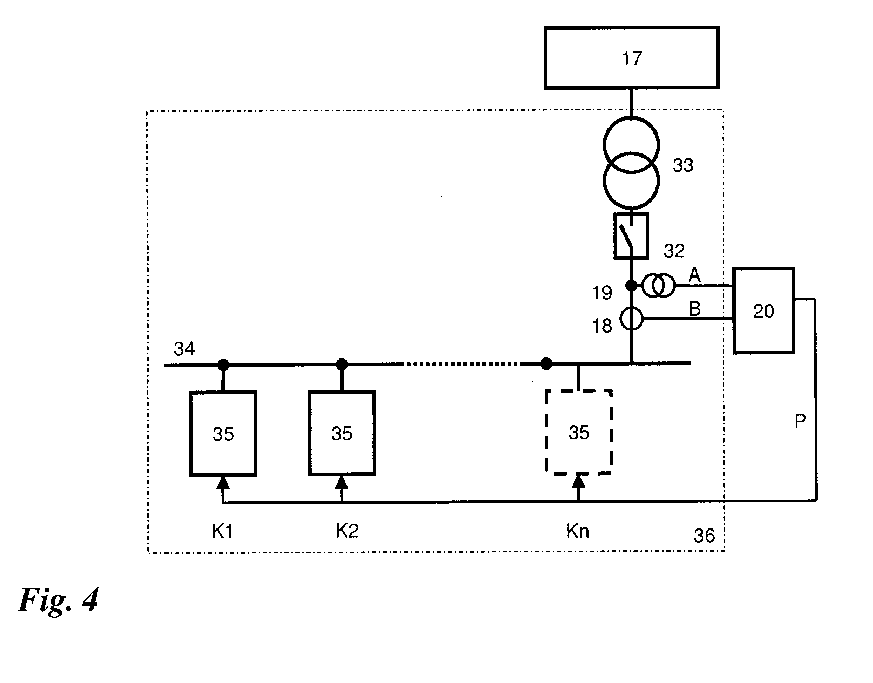

Die Messung der elektrischen Grössen Spannung und Strom kann - wie weiter unten anhand der Figuren noch erläutert wird - an den verschiedensten Orten im elektrischen Netz bzw. zwischen Generatoren und Netz erfolgen, beispielsweise:
- vor und nach dem Schalter oder vor und nach dem Haupttransformator eines Blockes einer Stromerzeugungsanlage bzw. eines Kraftwerks (siehe Fig. 2a ... 2d)₁
- nach dem Abgang einer aus mehreren Blöcken bestehenden Stromerzeugungsanlage bzw. Kraftwerks (siehe Fig. 3)₁
- innerhalb eines elektrischen Netzes, in welches mehrere Stromerzeugungsanlagen (Kraftwerksverbund) einspeisen (siehe Fig. 4).

Entsprechend dem Ort der Messung der elektrischen Grössen im elektrischen Netz und der Anzahl und Struktur der Stromerzeugungsanlagen (Anzahl Kraftwerke, Anzahl Kraftwerksblöcke pro Kraftwerk, usw.) kann die erfindungsgemässe Vorrichtung zum Erfassen eines Lastabwurfs ein oder mehrere Signale zu Art und Höhe der Lastreduktion für einen oder mehrere Blöcke einer Stromerzeugungsanlage und / oder für eine oder mehrere Stromerzeugungsanlagen erzeugen. Die Vorrichtung kann auch mehrere Signale für einen einzigen Block einer Stromerzeugungsanlage liefern, beispielsweise zur stufenweisen Lastabschaltung (Lastreduktion) entsprechend der Höhe des Lastabwurfs im elektrischen Netz.

Die erfindungsgemässe Vorrichtung zum Erfassen eines Lastabwurfs erlaubt die Unterscheidung in für Stromerzeugungsanlagen
- lastabschaltungs- bzw. lastreduktionsrelevante und
- nicht lastabschaltungs- bzw. lastreduktionsrelevante

Ereignisse. Im Falle eines lastreduktionsrelevanten Ereignisses im elektrischen Netz kann die Reaktion eine Lastreduktion
- in einem Sprung oder
- stufenweise
sein.

Bzgl. der Leistungshöhe kann die Lastreduktion auf
- Teillast,
- Inselbetrieb,
- Eigenbedarf des Blocks bzw. des Kraftwerkes,
- Leerlauf oder
- Stillstand (Null)
erfolgen.

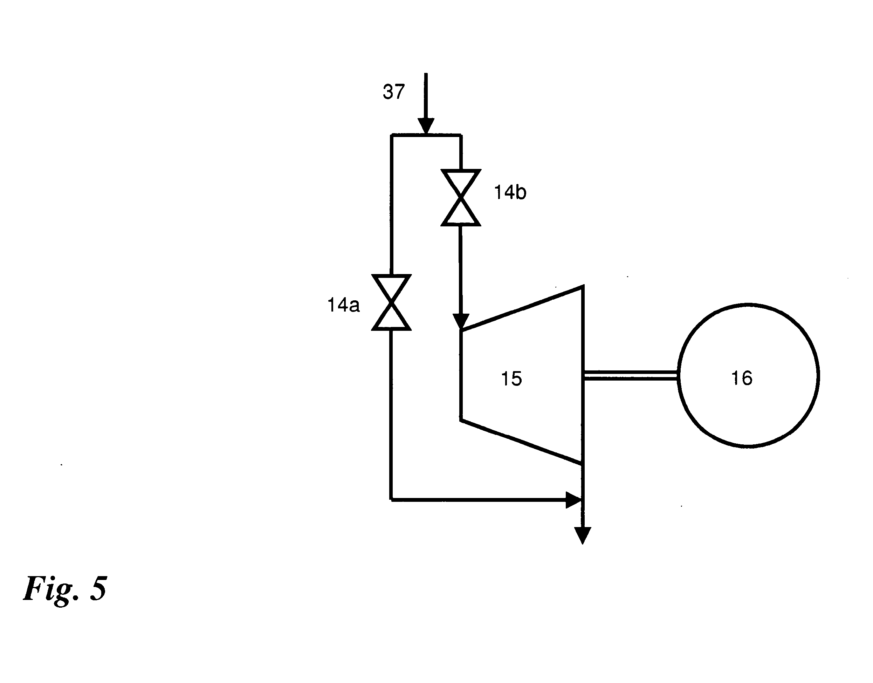

Je nach Art der rotierenden Maschine kann die Realisierung einer Lastreduktion beispielsweise durch
- kontrolliertes Reduzieren der Brennstoffzufuhr bei Verbrennungsmotoren oder Gasturbinen,
- kontrolliertes Reduzieren der Dampfzufuhr bei Dampfturbinen (siehe Fig. 5),
- kontrolliertes Reduzieren der Wasserzufuhr bei Wasserkraftwerken,
- kontrollierte Umschaltung von Turbinen- auf Pumpbetrieb bei Pumpspeicherkraftwerken,
- kontrolliertes Reduzieren der Luftzufuhr bei Luftturbinen, oder
- kontrolliertes Regeln oder Abschalten bei Windenergiekonvertern oder Meeresströmungsturbinen
erfolgen.

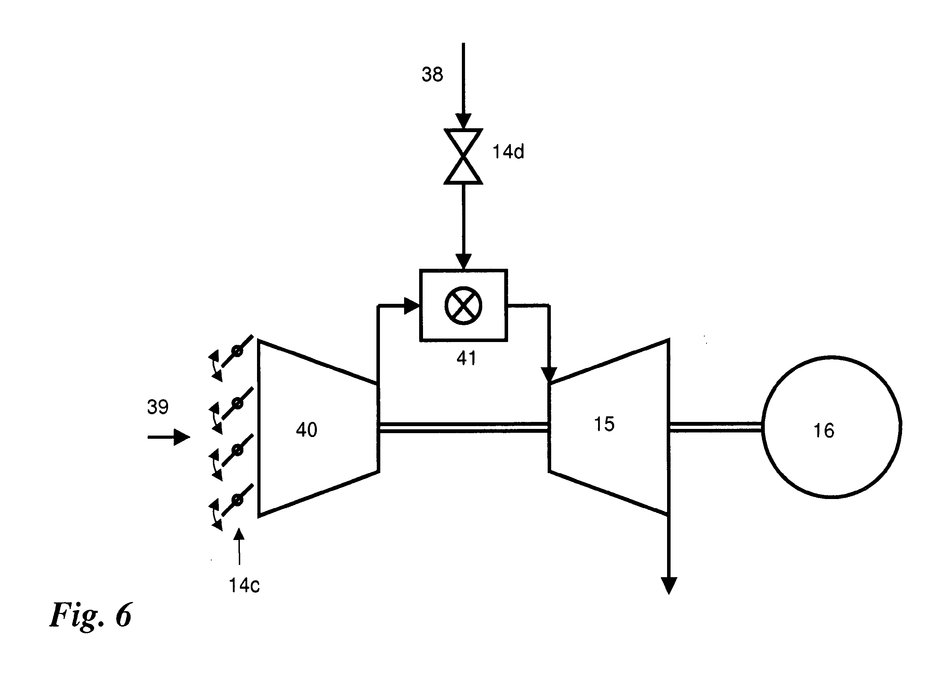

Das "kontrollierte Reduzieren" kann allgemein über ein "leistungsrelevantes Stellglied" erfolgen. Die gebräuchlichste Form ist der direkte Eingriff über ein Ventil (Brennstoff, Dampf, Wasser, ...) in der Zuführleitung der rotierenden Maschine. Bei Gasturbinenanlagen kann man beispielsweise neben der Reduzierung des Brennstoffmassenstromes durch das Brennstoffventil mittels sogenannter verstellbarer Leitschaufeln am Verdichtereinlass (Variable Inlet Guide Vanes VIGV) auch den Luftmassenstrom reduzieren (siehe Fig. 6).

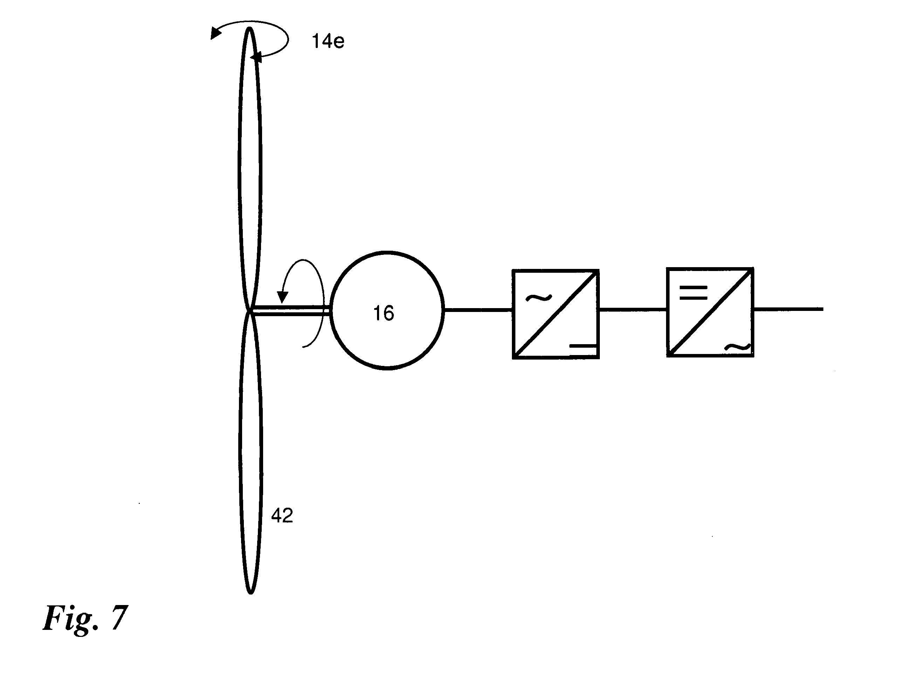

Die Lastreduktion kann aber auch indirekt über ein Stellglied in einer Bypassleitung der rotierenden Maschine erfolgen. Beispielsweise verfügen Dampfturbinenanlagen über Bypassleitungen, welche den Dampf um die Dampfturbine herum führen können. Bei Windenergiekonvertern oder Meeresströmungsturbinen kann der Eingriff beispielsweise über eine Verstellung des Anstellwinkels der Rotorblätter vorgenommen werden (siehe Fig. 7).

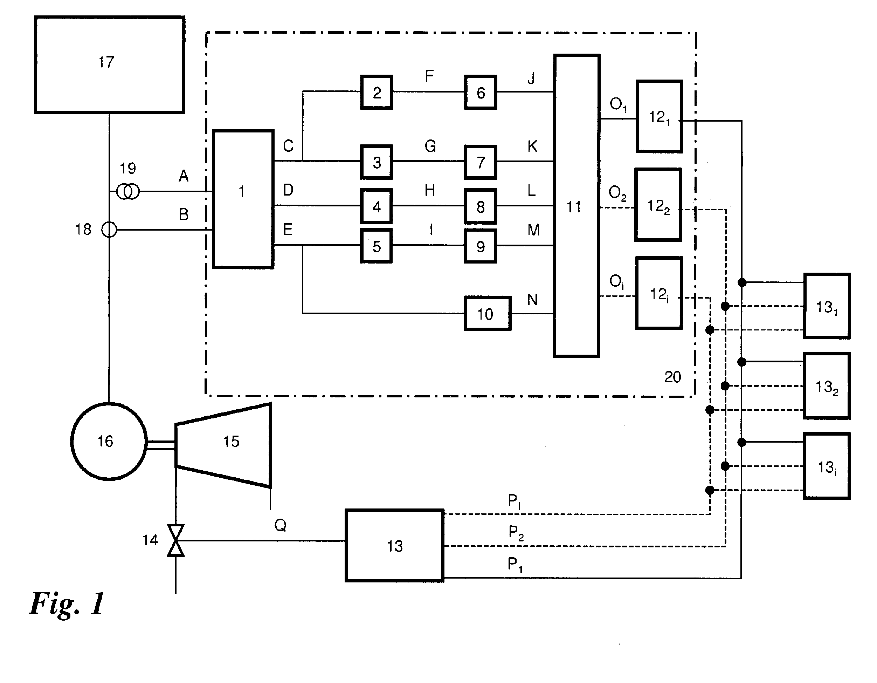

Fig. 1 zeigt in einem stark vereinfachten Blockschaltbild eine Energieerzeugungsanlage mit einer zur Steuerung der rotierenden Maschine eingesetzten Vorrichtung zum Erfassen eines Lastabwurfs gemäss einem bevorzugten Ausführungsbeispiel der Erfindung. Zur Energieerzeugung dient wenigstens eine Turbine 15, insbesondere in Form einer Dampfturbine, die über ein Stellglied (hier: ein steuerbares Turbinenventil) 14 mit Dampf versorgt wird. Die wenigstens eine Turbine 15 treibt einen Generator 16 an, der 3-phasigen Drehstrom erzeugt und über entsprechende Verbindungsleitungen in ein elektrisches Netz 17 einspeist. Kommt es in diesem Netz 17 zu einem verbraucherseitigen Lastabwurf, soll dieser Lastabwurf mittels einer Vorrichtung 20 zum Erfassen des Lastabwurfs frühzeitig detektiert werden, damit die wenigstens eine Turbine 15 so beeinflusst werden kann, dass die Folgen des Lastabwurfs sicher beherrscht werden, ohne die Netzversorgung unnötig zu beeinträchtigen.

Die Vorrichtung 20 zum Erfassen des Lastabwurfs bezieht ihre Eingangssignale von Stromwandlern 18 und Spannungswandlern 19, die in den Phasen bzw. zwischen den Phasen der Verbindungsleitungen angeordnet sind. Die von den Spannungswandlern 19 und Stromwandlern 18 abgegebenen Spannungsmesswerte A und Strommesswerte B werden in der Vorrichtung 20 einer Messwertaufbereitungseinheit 1 zugeführt, die aus den Messwerten A und B Werte für die Wirkleistung (C), den Wirkstrom (D) und den Blindstrom oder die Blindleistung (E) ableitet und ausgangsseitig zur Verfügung stellt.

Diese drei Ausgangswerte C, D und E werden einerseits nachgeschalteten Recheneinheiten 2, 3, 4 und 5 zugeführt, die daraus Gradientensignale (Änderungsgeschwindigkeiten) der Drehzahl (F), der Wirkleistung (G), des Wirkstroms (H) und des Blindstroms oder der Blindleistung (I) berechnen. Die Gradientensignale F, G, H, I und der Blindstrom oder die Blindleistung E werden als Eingangssignale Schwellwertgebern 6, 7, 8, 9 und 10 zugeführt. Die Schwellwertsignale J, K, L, M und N aller Schwellwertgeber 6, 7, 8, 9 und 10 werden schliesslich in einer nachfolgenden Auswerteeinheit 11 mit entsprechender Logik verarbeitet. Wird ein verbraucherseitiger Lastabwurf detektiert, gibt die Auswerteeinheit 11 am Ausgang ein entsprechendes Lastreduktionssignal O ab, das in einer Ausgangsstufe 12 verstärkt wird. Das verstärkte Lastreduktionssignal P gelangt dann in die Regelung 13, welche mittels eines Stellwertsignals Q die Dampfzufuhr zur Turbine 15 über das Stellglied 14 entsprechend steuert, um die Folgen des Lastabwurfs schnell und sicher aufzufangen.

Weitere Stellwertsignale Qᵢ können an das gleiche Stellglied mit verschiedenen Werten oder an andere Stellglieder der Turbine 15 oder an eine andere rotierende Maschine abgegeben werden. Die zur Regelung 13 geführten gestrichelten Leitungen deuten an, dass neben dem verstärkten Lastreduktionssignal P weitere verstärkte Lastreduktionssignale Pᵢ in die Regelung 13 eingegeben werden können, die von Lastreduktionssignalen Oᵢ stammen, die aus anderen Schwellwerten abgeleitet sind. Die gleichen Lastreduktionssignale P₁, P₂,...,Pᵢ können einem oder mehreren Reglern 13 gleichzeitig zugeführt werden.

Es versteht sich von selbst, dass anstelle der Dampfturbine 15 andere rotierende Maschinen, wie z.B. eine Gasturbine, eine Wasserturbine, ein Windenergiekonverter, eine Meeresströmungsturbine, ein Verbrennungsmotor, eine Luftturbine oder dgl. eingesetzt werden können, bei denen eine Leistungsreduktion bzw. Leistungsabschaltung auf andere Weise und mittels anderer Stellglieder erfolgt.

Der Vorteil der vorliegenden Lösung liegt dabei gerade in der Verwendung von ausschliesslich - von mechanischen Trägheiten unabhängigen - und unverzögert erfassten elektrischen Grössen A, B für die Erkennung eines Lastabwurfs im elektrischen Netz 17. Alle für die Erkennung eines Lastabwurfes erforderlichen elektrischen Grössen sowie ein "zu erwartender" oder "fiktiver" Drehzahlgradient werden aus einer ein- oder mehrphasigen Messung von Spannung und Strom gewonnen.

Die Berechnung der zu erwartenden Beschleunigung, die dem Drehzahlgradienten entspricht, erfolgt aus der aktuellen Leistung und dem Massenträgheitsmoment der Welle der rotierenden Maschine oder aus der Summe der Leistungen und Momente der rotierenden Maschinen.

Minimallasten müssen nicht abgefragt werden, weil dies in den aktuellen Leistungen schon berücksichtigt ist. Auch ist es nicht notwendig, die Vorrichtung zu deaktivieren, wenn die rotierende Maschine oder rotierenden Maschinen nicht mit dem Netz 17 verbunden sind.

Der wesentliche Vorteil der vorgeschlagenen Lösung liegt gerade darin, dass die Detektierung eines Lastabwurfes gegenüber dem Stand der Technik schon wesentlich früher erfolgt, noch bevor sich das Ereignis in einer messbaren Frequenzänderung auswirken kann. Dadurch steht für geeignete Massnahmen (insbesondere bei der Steuerung der rotierenden Maschine) mehr Zeit zur Verfügung. Zusätzlich kann über die erforderliche Höhe der Änderung der Lastminderung der rotierenden Maschine eine Aussage getroffen werden, welche nochmals die Massnahme zur Stabilisierung der Rotationsmaschine verbessert.

Die Auswertung der berechneten Grössen erlaubt zudem eine sichere Erkennung von Zuständen im Netz 17, die nicht auf einen Lastabwurf zurückzuführen sind, sich aber ähnlich auf das Verhalten der rotierenden Maschine auswirken. Beispielsweise führt ein Kurzschluss im Netz 17 ebenfalls zu einer Rotorbeschleunigung und damit einem Anstieg der Frequenz. Jedoch soll der Generator 16 in dieser Situation möglichst ohne Eingriff der Turbinenregelung 13 für einen kurzen Zeitraum in das Netz 17 einspeisen, um hier eine Lokalisierung und Abschaltung des Kurzschlusses zu ermöglichen. Das hier vorgeschlagene Verfahren "erkennt" z. B. diese Situation ebenfalls aus den gemessenen elektrischen Grössen (Bewertung des reaktiven Stromanteils oder Blindleistungsanteils).

Weiterhin beruht das Verfahren auf der Auswertung von Gradienten und nicht von absoluten Werten, damit ist die "Sonderbehandlung" von Teillastsituationen gegenüber den aus dem Stand der Technik bekannten Lösungen hinfällig.

Fig. 2a-2d zeigen verschiedene beispielhafte, zur Durchführung der Erfindung geeignete Anordnungen der Messstellen von Stromwandler 18 und Spannungswandler 19 in einem einen Generator 16 umfassenden Kraftwerksblock 31, der mit einem Schalter 32 (Fig. 2a, 2b) bzw. mit einem Transformator 33 (Fig. 2c, 2d) ausgestattet ist. In Fig. 2a erfolgt die Messung von Spannung A und Strom B auf der Netzseite des Schalters 32, in Fig. 2b auf der Generatorseite. In Fig. 2c erfolgt die Messung von Spannung A und Strom B auf der Netzseite des Transformators 33, in Fig. 2d auf der Generatorseite. Die Anordnung der Wandler 18 und 19 kann selbstverständlich auch direkt zwischen Generator 16 und Netz 17 (siehe Fig. 1) oder an beliebiger Stelle in einer beliebigen Anordnung von Schaltern 32 und Transformatoren 33 erfolgen. Es ist lediglich sicherzustellen, dass die Messungen A und B nahezu vollumfänglich das Leistungsverhalten des Generators 16 wiedergeben. Die gemessenen Spannungen A und Ströme B werden in allen Fällen einer Vorrichtung 20 zum Erfassen des Lastabwurfs zugeführt, die bei Auftreten eines Ereignisses ein verstärktes Lastreduktionssignal P an eine Regelung 13 der Turbine 15 abgibt. Die Regelung 13 beeinflusst dann mittels eines Stellwertsignals Q über ein Stellglied 14 die Leistungsabgabe der Turbine 15 bzw. des Generators 16.

Fig. 3 zeigt eine weitere beispielhafte, zur Durchführung der Erfindung geeignete Anordnung der Messstellen in einem Kraftwerk 35, welches mehrere Kraftwerksblöcke 31 bzw. B1,..., Bn umfasst, die auf eine Sammelschiene oder Schaltanlage 34 arbeiten. Der Stromwandler 18 ist hier zwischen Sammelschiene oder Schaltanlage 34 und Schalter 32 angeordnet, der Spannungswandler 19 kann direkt an der Sammelschiene oder Schaltanlage 34 oder dem Netzabgang angeordnet werden. Die Anordnung kann jedoch auch zwischen Schalter 32 und Transformator 33 oder Transformator 33 und Netz 17 oder zwischen Kraftwerk 35 und Netz 17 oder an beliebiger Stelle in einer beliebigen Anordnung von Schaltern 32 und Transformatoren 33 erfolgen. Aus den gemessenen Werten von A und B wird in einer Vorrichtung 20 zum Erfassen des Lastabwurfs ein verstärktes Lastreduktionssignal P erzeugt, das in die Kraftwerksblöcke 31 bzw. B1,..., Bn zurückgeführt wird.

Fig. 4 zeigt eine weitere beispielhafte, zur Durchführung der Erfindung geeignete Anordnung der Messstellen in einem Kraftwerksverbund 36, der mehrere Kraftwerke 35 bzw. K1,..., Kn umfasst, die auf eine Sammelschiene oder Schaltanlage 34 arbeiten. Der Stromwandler 18 ist hier wiederum zwischen Sammelschiene oder Schaltanlage 34 und Schalter 32 angeordnet, der Spannungswandler 19 kann direkt an der Sammelschiene oder Schaltanlage 34 oder dem Netzabgang angeordnet werden. Die Anordnung kann jedoch auch zwischen Schalter 32 und Transformator 33 oder Transformator 33 und Netz 17 oder zwischen Kraftwerksverbund 36 und Netz 17 oder an beliebiger Stelle in einer beliebigen Anordnung von Schaltern 32 und Transformatoren 33 erfolgen. Aus den gemessenen Werten von A und B wird in einer Vorrichtung 20 zum Erfassen des Lastabwurfs ein verstärktes Lastreduktionssignal P erzeugt, das in die Kraftwerke 35 bzw. K1,..., Kn zurückgeführt wird.

Es ist lediglich sicherzustellen, dass das Lastreduktionssignal P oder die Lastreduktionssignale P₁, P₂,..., Pᵢ auf die Regelung 13 der rotierenden Maschinen des Kraftwerksblocks 31 oder der Kraftwerke 35 oder des Kraftwerksverbundes 36 zurückgeführt werden, deren an das Netz 17 abgegebene Summe der Leistungen mit der Spannungsmessung A und der Strommessung B erfasst wird.

Werden an verschiedenen Stellen Strom- und Spannungsmessungen durchgeführt und daraus Lastreduktionssignale Oᵢ abgeleitet, können nach Massgabe der Netzstruktur logische Verknüpfungen dieser Signale vorgenommen werden, um in ausgewählte Kraftwerksblöcke 31 bzw. deren rotierende Maschinen in vorbestimmter Weise einzugreifen.

Fig. 5 verdeutlicht den für eine Lastreduktion möglichen Eingriff in eine Dampfturbine 15, die einen Generator 16 antreibt. Die Turbine 15 erhält Dampf 37 über ein Stellglied/Haupteinlassventil 14b. Ein weiteres Stellglied/Bypassventil 14a führt bei Bedarf Dampf an der Turbine 15 vorbei zum Ausgang der Turbine 15. Beide Stellglieder 14a,b können in geeigneter Kombination oder für sich zur Umsetzung eines Lastreduktionssignals O verwendet werden.

Fig. 6 verdeutlicht den für eine Lastreduktion möglichen Eingriff in eine Gasturbine 15, die einen Generator 16 antreibt. Bei der Gasturbine 15 saugt ein Verdichter 40 über ein Stellglied/Verstellbare Vorleitreihen 14c Luft 39 an und verdichtet sie. Die verdichtete Luft wird an eine Brennkammer 41 weitergeleitet und dort zur Verbrennung eines Brennstoffs 38 verwendet, der über ein
Stellglied/Brennstoffventil 14d zugeführt wird. Das dabei entstehende Heissgas wird in der Turbine 15 unter Arbeitsleistung entspannt. Auch hier können beide Stellglieder 14c,d in geeigneter Kombination oder für sich zur Umsetzung eines Lastreduktionssignals O verwendet werden.

Fig. 7 schliesslich zeigt einen Windenergiekonvertern oder eine Meeresströmungsturbine mit einem Rotor 42, dessen Blätter mittels eines Stellgliedes/Blattwinkelverstellung 14e im Anstellwinkel verstellbar sind. Der angetriebene Generator 16 ist über eine geeignete, mit Umrichtern bestückte Leistungselektronik an das Netz angeschlossen. Das
Stellglied/Blattwinkelverstellung 14e kann hier zur Umsetzung eines Lastreduktionssignals O verwendet werden.

Zusammenfassung:
- Die vorgeschlagene Lösung beruht ausschliesslich auf einer schnellen, unverzögerten Erfassung der ein- oder mehrphasigen Ströme und Spannungen in elektrischen Netzen.
- Aus den gemessenen Grössen werden verschiedene abgeleitete Grössen berechnet.
- Aus der abgeleiteten Wirkleistungsberechnung erfolgt unter Berücksichtigung der Massenträgheitsmomente der rotierenden Maschinen eine augenblickliche Abschätzung der zu erwartenden Beschleunigungen (bevor diese überhaupt eintreten) unter Berücksichtigung der aktuell vor dem Ereignis zugrunde liegenden Arbeitspunkte der rotierenden Maschinen.

- Es erfolgt eine Detektierung der zu erwartenden Laständerung.
- Unter Berücksichtigung anderer abgeleiteter Grössen werden Netzsituationen mit lastabwurfähnlichen Charakteristiken erkannt und eine unerwünschte Auslösung von entsprechenden Schalteinrichtungen unterdrückt.

### BEZUGSZEICHENLISTE

- 1: Messwertaufbereitungseinheit
- 2: Recheneinheit (Drehzahlgradient)
- 3: Recheneinheit (Wirkleistungsgradient)
- 4: Recheneinheit (Wirkstromgradient)
- 5: Recheneinheit (Blindstromgradient/Blindleistungsgradient)
- 6: Schwellwertgeber (Drehzahlgradient)
- 7: Schwellwertgeber (Wirkleistungsgradient)
- 8: Schwellwertgeber (Wirkstromgradient)
- 9: Schwellwertgeber (Blindstromgradient/Blindleistungsgradient)
- 10: Schwellwertgeber (Blindstrom/Blindleistung)
- 11: Auswerteeinheit (mit entsprechender Logik)
- 12: Ausgangsstufe
- 13: Regelung
- 14: (Leistungs-)Stellglied
- 14a: Stellglied/Bypassventil
- 14b: Stellglied/Haupteinlassventil
- 14c: Stellglied/Verstellbare Vorleitreihen
- 14d: Stellglied/Brennstoffventil
- 14e: Stellglied/Blattwinkelverstellung
- 15: rotierende Maschine/Turbine
- 16: Generator
- 17: elektrisches Wechsel- oder Drehstromnetz
- 18: Stromwandler
- 19: Spannungswandler
- 20: Vorrichtung zum Erfassen eines Lastabwurfs
- 31,B1,..,Bn: Kraftwerksblock
- 32: Schalter (Trenner)
- 33: Transformator
- 34: Sammelschiene oder Schaltanlage
- 35,K1,..,Kn: Kraftwerk
- 36: Kraftwerksverbund
- 37: Dampf
- 38: Brennstoff
- 39: Luft
- 40: Verdichter
- 41: Brennkammer
- 42: Rotor
- A: Spannung
- B: Strom
- C: Wirkleistung
- D: Wirkstrom
- E: Blindstrom/Blindleistung
- F: Drehzahlgradientensignal
- G: Wirkleistungsgradientensignal
- H: Wirkstromgradientensignal
- I: Blindstromgradientensignal/Blindleistungsgradientensignal
- J: Schwellwertsignal (Drehzahlgradient)
- K: Schwellwertsignal (Wirkleistungsgradient)
- L: Schwellwertsignal (Wirkstromgradient)
- M: Schwellwertsignal (Blindstromgradient/Blindleistungsgradient)
- N: Schwellwertsignal (Blindstrom/Blindleistung)
- O,Oᵢ: Lastreduktionssignal
- P,Pᵢ: verstärktes Lastreduktionssignal
- Q,Qᵢ: Stellwertsignal (Stellglied)

## Patentansprüche

1. Verfahren zum frühzeitigen Erkennen und vorausschauenden Beherrschen von verbraucherseitigen Lastabwürfen in einem elektrischen Wechsel- oder Drehstromnetz (17), welches von wenigstens einem Generator (16), der von wenigstens einer rotierenden Maschine (15) angetrieben wird, mit Wechsel- oder Drehstrom versorgt wird, wobei Ströme (B) und Spannungen (A) zwischen dem wenigstens einen Generator (16) und dem elektrischen Wechsel- oder Drehstromnetz (17) und/oder im elektrischen Wechsel- oder Drehstromnetz (17) gemessen werden, aus den gemessenen Strömen (B) und Spannungen (A) ein oder mehrere Signale (O, Oᵢ, P, Pᵢ) für einen Eingriff in die wenigstens eine rotierende Maschine (15) abgeleitet und eingesetzt werden, die wenigstens eine rotierende Maschine (15) eine Regelung (13) für die abgegebene Leistung aufweist, und die abgeleiteten Signale (O, Oᵢ, P, Pᵢ) an die Regelung (13) der wenigstens einen rotierenden Maschine (15) abgegeben werden, um bei einem netzseitigen Lastabwurf die wenigstens eine rotierende Maschine (15) in ihrer Leistungsabgabe derart zu beeinflussen, dass Erzeugung und Nachfrage von elektrischer Leistung schnell wieder in Übereinstimmung gebracht werden, **dadurch gekennzeichnet, dass** aus den gemessenen Strömen (B) und Spannungen (A) eine oder mehrere elektrische Grössen (C, D, E) abgeleitet werden, dass aus den abgeleiteten elektrischen Grössen (C, D, E) die zeitlichen Gradienten (F, G, H, I) dieser und/oder weiterer Grössen berechnet werden, und dass die Signale (O, Oᵢ, P, Pᵢ) für einen Eingriff in die wenigstens eine rotierende Maschine (15) erzeugt werden, sobald eine oder mehrere der berechneten zeitlichen Gradienten (F, G, H, I) einen jeweils zugeordneten Schwellwert (J, K, L, M) über- bzw. unterschreiten, und dass die abgeleiteten elektrischen Grössen die Wirkleistung, den Wirkstrom und die Blindleistung oder den Blindstrom umfassen, und dass die berechneten zeitlichen Gradienten den Wirkleistungsgradienten (G), den Wirkstromgradienten (H), den Blindstrom- oder Blindleistungsgradienten (I) und den Drehzahlgradienten (F) umfassen.

2. Verfahren nach Anspruch 1, **dadurch gekennzeichnet, dass** durch den Vergleich der berechneten Gradienten (F, G, H, I) und des Blindstromes oder der Blindleistung (E) mit zugeordneten Schwellwerten die Bildung von entsprechenden Schwellwertsignalen (J, K, L, M, N) erfolgt, und dass zur Erzeugung der Signale (O, Oᵢ, P, Pᵢ) für den Eingriff in die wenigstens eine rotierende Maschine (15) die Schwellwertsignale (J, K, L, M, N) in einer Auswerteeinheit (11) logisch miteinander verknüpft werden.

3. Verfahren nach einem der Ansprüche 1 oder 2, **dadurch gekennzeichnet, dass** die wenigstens eine rotierende Maschine (15) eine über ein Stellglied (14; 14a-e) in der Leistungsabgabe steuerbare rotierende Maschine, insbesondere Turbine (15) ist, und dass die Signale (O, Oᵢ, P, Pᵢ) für den Eingriff in die Turbine (15) an eine Regelung (13) weitergeleitet werden, an welche das Stellglied (14; 14a-e) angeschlossen ist.

4. Verfahren nach Anspruch 3, **dadurch gekennzeichnet, dass** die Turbine (15) eine Dampfturbine ist und das Stellglied (14; 14a, 14b) die Zufuhr von Dampf (37) zur Turbine (15) steuert.

5. Verfahren nach Anspruch 3, **dadurch gekennzeichnet, dass** die Turbine (15) Teil einer Gasturbine ist und das Stellglied (14; 14c, 14d) die Zufuhr von Brennstoff (38) und/oder Verbrennungsluft (39) zur Gasturbine steuert.

6. Verfahren nach Anspruch 3, **dadurch gekennzeichnet, dass** die Signale (O, Oᵢ) für den Eingriff in die Turbine (15) vor der Weiterleitung an die Regelung (13) in einer Ausgangsstufe (12) verstärkt werden.

7. Verfahren nach einem der Ansprüche 1 bis 3, **dadurch gekennzeichnet, dass** alle für die Erkennung eines Lastabwurfs erforderlichen elektrischen Grössen sowie ein "zu erwartender" oder "fiktiver" Drehzahlgradient (F) des Rotors der wenigstens einen rotierenden Maschine (15) aus einer ein- oder mehrphasigen Messung (18, 19) von Spannung (A) und Strom (B) im elektrischen Wechsel- oder Drehstromnetz (17) gewonnen werden.

8. Verfahren nach Anspruch 7, **dadurch gekennzeichnet, dass** die Berechnung einer zu erwartenden Beschleunigung aus der aktuellen Leistung und dem Massenträgheitsmoment des Rotors der wenigstens einen rotierenden Maschine (15) erfolgt.

9. Verfahren nach einem der Ansprüche 1 bis 8, **dadurch gekennzeichnet, dass** mehrere, jeweils von wenigstens einer rotierenden Maschine angetriebene Generatoren (16) an das elektrische Wechsel- oder Drehstromnetz (17) angeschlossen sind, und dass als Reaktion auf einen Lastabwurf im elektrischen Wechsel- oder Drehstromnetz (17) mit aus den gemessenen Strömen (B) und Spannungen (A) abgeleiteten Signalen (O, Oᵢ, P, Pᵢ) wahlweise in die Leistungserzeugung der rotierenden Maschinen eingegriffen wird.

10. Vorrichtung zur Durchführung des Verfahrens nach einem der Ansprüche 1 bis 9, umfassend Stromwandler (18) und Spannungswandler (19), welche zwischen dem wenigstens einen Generator und dem elektrischen Wechsel- oder Drehstromnetz und/oder an ausgewählten Punkten des elektrischen Wechsel- oder Drehstromnetzes (17) angeordnet sind und ausgangsseitig mit wenigstens einer Vorrichtung (20) zum Erfassen eines Lastabwurfs verbunden sind, deren Ausgang mit der wenigstens einen rotierenden Maschine (15) in Wirkverbindung steht.

11. Vorrichtung nach Anspruch 10, **dadurch gekennzeichnet, dass** die wenigstens eine rotierende Maschine eine über ein Stellglied (14; 14a-e) in der Leistungsabgabe steuerbare Maschine, insbesondere Turbine (15) ist, und dass zwischen dem Ausgang der wenigstens einen Vorrichtung (20) zum Erfassen eines Lastabwurfs und dem Stellglied (14; 14a-e) der wenigstens einen rotierenden Maschine bzw. Turbine (15) eine Regelung (13) angeordnet ist.

12. Vorrichtung nach Anspruch 10 oder 11, **dadurch gekennzeichnet, dass** die wenigstens eine Vorrichtung (20) zum Erfassen eines Lastabwurfs eine Messwertaufbereitungseinheit (1) aufweist, welche eingangsseitig die von den Stromwandlern (18) und Spannungswandlern (19) aufgenommenen Ströme (B) und Spannungen (A) erfasst und ausgangsseitig die daraus abgeleitete Wirkleistung (C), den Wirkstrom (D) und den Blindstrom oder die Blindleistung (E) abgibt, dass hinter der Messwertaufbereitungseinheit (1) Recheneinheiten (2, 3, 4, 5) angeordnet sind, welche aus den von der Messwertaufbereitungseinheit (1) abgegebenen Werten (C, D, E) die zeitlichen Gradienten (F, G, H, I) von Drehzahl, Wirkleistung, Wirkstrom und Blindstrom oder Blindleistung berechnen, dass hinter den Recheneinheiten (2, 3, 4, 5) jeweils ein oder mehrere zugeordnete Schwellwertgeber (6, 7, 8, 9) angeordnet sind, der oder die beim Über- oder Unterschreiten eines Schwellwertes ein entsprechendes Schwellwertsignal (J, K, L, M) abgeben, und dass die Schwellwertsignale (J, K, L, M) einer nachgeordneten Auswerteeinheit (11) zugeführt werden, die nach Massgabe der Schwellwertsignale (J, K, L, M) an ihrem Ausgang ein oder mehrere Lastreduktionssignale (O, Oᵢ) zur Beeinflussung der wenigstens einen rotierenden Maschine bzw. Turbine (15) abgibt.

13. Vorrichtung nach Anspruch 12, **dadurch gekennzeichnet, dass** der von der Messwertaufbereitungseinheit (1) abgegebene Blindstrom- oder Blindleistungswert (E) direkt einem oder mehreren weiteren Schwellwertgebern (10) zugeführt wird, deren Ausgänge mit der Auswerteeinheit (11) verbunden sind.

14. Vorrichtung nach Anspruch 12 oder 13, **dadurch gekennzeichnet, dass** der Auswerteeinheit (11) eine oder mehrere Ausgangsstufen (12) zur Verstärkung des Lastreduktionssignals (O, Oᵢ) nachgeschaltet sind.

## Claims

1. Method for early detection and anticipatory control of consumer-end load shedding in a single-phase or polyphase electrical grid (17) which is supplied with single-phase or polyphase by at least one generator (16) which is driven by at least one rotating machine (15), wherein currents (B) and voltages (A) are measured between the at least one generator (16) and the single-phase or polyphase electrical grid (17) and/or in the single-phase or polyphase electrical grid (17), one or more signals (O, Oᵢ, P, Pᵢ) is or are derived from the measured currents (B) and voltages (A) and is or are used for action on the at least one rotating machine (15), the at least one rotating machine (15) has a regulator (13) for the emitted power, and the derived signals (O, Oᵢ, P, Pᵢ) are emitted to the regulator (13) of the at least one rotating machine (15) in order to influence the power output of the at least one rotating machine (15) in the event of load shedding in the grid, such that the generation of and demand for electrical power are quickly matched again, **characterized in that** one or more electrical variables (C, D, E) is or are derived from the measured currents (B) and voltages (A), **in that** the gradients over time (F, G, H, I) of these and/or further variables are calculated from the derived electrical variables (C, D, E), and **in that** the signals (O, Oᵢ, P, Pᵢ) are produced for action on the at least one rotating machine (15) as soon as one or more of the calculated gradients over time (F, G, H, I) overshoots or undershoots a respectively associated threshold value (J, K, L, M), and **in that** the derived electrical variables comprise the real power, the real current and the reactive power or the reactive current, and **in that** the calculated gradients over time comprise the real power gradient (G), the real current gradient (H), the reactive current gradient or the reactive power gradient (I) and the rotation speed gradient (F).

2. Method according to Claim 1, **characterized in that** appropriate threshold value signals (J, K, L, M, N) are formed by comparison of the calculated gradients (F, G, H, I) and of the reactive current or the reactive power (E) with associated threshold values, and **in that** the threshold value signals (J, K, L, M, N) are logically linked to one another in an evaluation unit (11) in order to produce the signals (O, Oᵢ, P, Pᵢ) for action on the at least one rotating machine (15).

3. Method according to either one of Claims 1 and 2, **characterized in that** the at least one rotating machine (15) is a rotating machine, in particular a turbine (15), whose power output can be controlled via an actuator (14; 14 a - e), and **in that** the signals (O, Oᵢ, P, Pᵢ) for acting on the turbine (15) are passed to a regulator (13), to which the actuator (14; 14 a - e) is connected.

4. Method according to Claim 3, **characterized in that** the turbine (15) is a steam turbine and the actuator (14; 14a, 14b) controls the supply of steam (37) to the turbine (15).

5. Method according to Claim 3, **characterized in that** the turbine (15) is part of a gas turbine, and the actuator (14; 14c, 14d) controls the supply of fuel (38) and/or combustion air (39) to the gas turbine.

6. Method according to Claim 3, **characterized in that** the signals (O, Oᵢ) for acting on the turbine (15) are amplified in an output stage (12) before being passed on to the regulator (13).

7. Method according to one of Claims 1 to 3, **characterized in that** all of the electrical variables which are required to detect load shedding as well as a rotation speed gradient (F), which is "to be expected" or is "fictitious", of the rotor of the at least one rotating machine (15) is obtained from a single-phase or polyphase measurement (18, 19) of the voltage (A) and current (B) in the single-phase or polyphase electrical grid (17).

8. Method according to Claim 7, **characterized in that** an acceleration to be expected is calculated from the instantaneous power and the mass moment of inertia of the rotor of the at least one rotating machine (15).

9. Method according to one of Claims 1 to 8, **characterized in that** a plurality of generators (16), which are each driven by at least one rotating machine, are connected to the single-phase or polyphase electrical grid (17), and **in that** signals (O, Oᵢ, P, Pᵢ) derived from the measured currents (B) and voltages (A) are selectively used to influence the power generated by the rotating machines in reaction to load shedding in the single-phase or polyphase electrical grid (17).

10. Apparatus for carrying out the method according to one of Claims 1 to 9, comprising current transformers (18) and voltage transformers (19) which are arranged between the at least one generator and the single-phase or polyphase electrical grid, and/or are arranged at selected points in the single-phase or polyphase electrical grid (17), and are connected on the output side to at least one apparatus (20) for detection of load shedding, the output of which apparatus (20) is operatively connected to the at least one rotating machine (15).

11. Apparatus according to Claim 10, **characterized in that** the at least one rotating machine is a machine, in particular a turbine (15), whose power output can be controlled via an actuator (14; 14 a - e), and **in that** a regulator (13) is arranged between the output of the at least one apparatus (20) for detection of load shedding and the actuator (14; 14 a - e) of the at least one rotating machine or turbine (15).

12. Apparatus according to Claim 10 or 11, **characterized in that** the at least one apparatus (20) for detection of load shedding has a measured value preprocessing unit (1) whose input side detects the currents (B) and voltages (A) recorded by the current transformers (18) and voltage transformers (19) and which, on the output side, emits the real power (C) derived therefrom, the real current (D) and the reactive current or the reactive power (E), **in that** arithmetic units (2, 3, 4, 5) are arranged downstream from the measured value preprocessing unit (1) and use the values (C, D, E) emitted from the measured value preprocessing unit (1) to calculate the gradients over time (F, G, H, I) of the rotation speed, real power, real current and reactive current or reactive power, **in that** one or more associated threshold value transmitters (6, 7, 8, 9) is or are in each case arranged downstream from the arithmetic units (2, 3, 4, 5) and emits or emit a corresponding threshold value signal (J, K, L, M) when a threshold value is overshot or undershot, and **in that** the threshold value signals (J, K, L, M) are supplied to a downstream evaluation unit (11) which, on the basis of the threshold value signals (J, K, L, M), emits at its output one or more load reduction signals (O, Oᵢ) in order to influence the at least one rotating machine or turbine (15).

13. Apparatus according to Claim 12, **characterized in that** the reactive current or reactive power value (E) emitted by the measured value preprocessing unit (1) is supplied directly to one or more further threshold value transmitters (10), whose outputs are connected to the evaluation unit (11).

14. Apparatus according to Claim 12 or 13, **characterized in that** one or more output stages (12) for amplification of the load reduction signal (O, Oᵢ) is or are connected downstream from the evaluation unit (11).

## Revendications

1. Procédé pour la détection précoce et la maîtrise prévisionnelle de délestages de charge côté utilisateur dans un réseau électrique alternatif ou triphasé (17) qui est alimenté en courant alternatif ou triphasé par au moins un générateur (16) entraîné par au moins une machine tournante (15), dans lequel des courants (B) et des tensions (A) entre l'au moins un générateur (16) et le réseau alternatif ou triphasé (17) et/ou dans le réseau alternatif ou triphasé (17) sont mesurés, un ou plusieurs signaux (O, Oᵢ, P, Pᵢ) sont dérivés des courants (B) et des tensions (A) mesurés et sont utilisés pour être appliqués dans l'au moins une machine tournante (15), l'au moins une machine tournante (15) comprend une unité de commande (13) de la puissance délivrée, et les signaux dérivés (O, Oᵢ, P, Pᵢ) sont délivrés à l'unité de commande (13) de l'au moins une machine tournante (15) afin d'agir sur la puissance délivrée par l'au moins une machine tournante (15) lors d'un délestage de charge côté réseau de manière à rétablir rapidement la conformité de la production et de la demande de puissance électrique, **caractérisé en ce qu'**une ou plusieurs grandeurs électriques (C, D, E) sont dérivées des courants (B) et tensions (A) mesurés, **en ce que** les gradients temporels (F, G, H, I) de ces grandeurs et/ou d'autres grandeurs sont calculés à partir des grandeurs électriques (C, D, E) dérivées, et **en ce que** les signaux (O, Oᵢ, P, Pᵢ) sont générés afin d'être appliqués dans l'au moins une machine tournante (15) lorsqu'un ou plusieurs gradients temporels calculés (F, G, H, I) dépassent, vers le haut ou vers le bas, une valeur de seuil respective associée (J, K, L, M), **en ce que** les grandeurs électriques dérivées comprennent la puissance active, le courant actif et la puissance réactive ou le courant réactif, et **en ce que** les gradients temporels calculés comprennent le gradient de puissance active (G), le gradient de courant actif (H), le gradient de courant actif ou de puissance active (I) et le gradient vitesse de rotation (F).

2. Procédé selon la revendication 1, **caractérisé en ce que** la formation de signaux de valeurs de seuil correspondants (J, K, L, M, N) s'effectue par comparaison des gradients calculés (F, G, H, I) et du courant réactif ou de la charge réactive (E) à des valeurs de seuil associées, et **en ce que**, pour générer les signaux (O, Oᵢ, P, Pᵢ) destinés à être appliqués dans l'au moins une machine tournante (15), les signaux de valeurs de seuil (J, K, L, M, N) sont combinés les uns aux autres logiquement dans une unité d'évaluation (11).

3. Procédé selon la revendication 1 ou 2, **caractérisé en ce que** l'au moins une machine tournante (15) est une machine tournante dont la puissance délivrée peut être commandée par l'intermédiaire d'un actionneur (14 ; 14a-e), notamment une turbine (15), et **en ce que** les signaux (O, Oᵢ, P, Pᵢ) destinés à être appliqués dans la turbine (15) sont transmis à une unité de commande (13) à laquelle est relié l'actionneur (14 ; 14a-e).

4. Procédé selon la revendication 3, **caractérisé en ce que** la turbine (15) est une turbine à vapeur et **en ce que** l'actionneur (14 ; 14a, 14b) commande l'alimentation en vapeur (37) de la turbine (15).

5. Procédé selon la revendication 3, **caractérisé en ce que** la turbine (15) fait partie d'une turbine à gaz et **en ce que** l'actionneur (14 ; 14c, 14d) commande l'alimentation en combustible (38) et/ou en air de combustion (39) de la turbine à gaz.

6. Procédé selon la revendication 3, **caractérisé en ce que** les signaux (O, Oᵢ) sont amplifiés dans un étage de sortie (12) pour leur application dans la turbine (15) avant leur transmission à l'unité de commande (13).

7. Procédé selon l'une quelconque des revendications 1 à 3, **caractérisé en ce que** toutes les grandeurs électriques nécessaires pour la détection d'un délestage de charge ainsi qu'un gradient de vitesse de rotation "à prévoir" ou "fictif" (F) du rotor de l'au moins une machine tournante (15) sont obtenus à partir d'une mesure mono- ou polyphasée (18, 19) de la tension (A) et du courant (B) dans le réseau électrique alternatif ou triphasé (17).

8. Procédé selon la revendication 7, **caractérisé en ce que** le calcul d'une accélération prévue est effectué à partir de la puissance instantanée et du moment d'inertie du rotor de l'au moins une machine tournante (15).

9. Procédé selon l'une quelconque des revendications 1 à 8, **caractérisé en ce qu'**une pluralité de générateurs (16), respectivement entraînés par au moins une machine tournante, sont reliés au réseau électrique alternatif ou triphasé (17), et **en ce qu'**en réaction à un délestage de charge dans le réseau électrique alternatif ou triphasé (17), on agit sélectivement sur la production de puissance des machines tournantes au moyen de signaux (O, Oᵢ, P, Pᵢ) dérivés des courants (B) et tensions (A) mesurés.

10. Dispositif pour la mise en oeuvre du procédé selon l'une quelconque des revendications 1 à 9, comprenant des transformateurs de courant (18) et des transformateurs de tension (19) qui sont disposés entre l'au moins un générateur et le réseau électrique alternatif ou triphasé et/ou en des points sélectionnés du réseau électrique alternatif ou triphasé (17) et sont reliées, côté sortie, à au moins un dispositif (20) de détection d'un délestage de charge, dont la sortie est en liaison fonctionnelle avec l'au moins une machine tournante (15).

11. Dispositif selon la revendication 10, **caractérisé en ce que** l'au moins une machine tournante est une machine tournante dont la puissance délivrée peut être commandée par l'intermédiaire d'un actionneur (14 ; 14a-e), notamment une turbine (15), et **en ce qu'**une unité de commande (13) est disposée entre la sortie de l'au moins un dispositif (20) destiné à détecter un délestage de charge et l'actionneur (14 ; 14a-e) de l'au moins une machine tournante ou turbine (15).

12. Dispositif selon la revendication 10 ou 11, **caractérisé en ce que** l'au moins un dispositif (20) destiné à détecter un délestage de charge comprend une unité de conditionnement des mesures (1) qui détecte en entrée les courants (B) et les tensions (A) prélevés par les transformateurs de courant (18) et les transformateurs de tension (19), et délivre en sortie la puissance active (C), le courant actif (D) et le courant réactif ou la puissance réactive (E) dérivés de ceux-ci, **en ce que**, en aval de l'unité de conditionnement des mesures (1) sont disposées des unités de calcul (2, 3, 4, 5) qui calculent à partir des valeurs (C, D, E) délivrées par l'unité de conditionnement des mesures (1) les gradients temporels (F, G, H, I) de la vitesse de rotation, de la puissance active, du courant actif et du courant réactif ou de la puissance réactive, **en ce que**, en aval des unités de calcul (2, 3, 4, 5) sont respectivement disposés un ou plusieurs générateurs de valeurs de seuil (6, 7, 8, 9) qui délivrent un signal de valeur de seuil (J, K, L, M) correspondant lors d'un dépassement, vers le haut ou ver le bas, d'une valeur de seuil, et **en ce que** les signaux de valeurs de seuil (J, K, L, M) sont fournis à une unité d'évaluation aval (11) qui délivre à sa sortie, sur la base des signaux de valeurs de seuil (J, K, L, M), un ou plusieurs signaux de réduction de charge (O, Oᵢ) destinés à agir sur l'au moins une machine tournante ou turbine (15).

13. Dispositif selon la revendication 12, **caractérisé en ce que** la valeur de courant réactif ou de puissance réactive (E) délivrée par l'unité de conditionnement des mesures (1) est directement fournie à un ou plusieurs autres générateurs de seuil (10) dont les sorties sont reliées à l'unité d'évaluation (11).

14. Dispositif selon la revendication 12 ou 13, **caractérisé en ce qu'**un ou plusieurs étages de sortie (12) destinés à amplifier le signal de réduction de charge (O, Oᵢ) sont connectés en aval de l'unité d'évaluation (11).
